# EUROPEAN PATENT APPLICATION

(11) **EP 1 353 497 A2**
(43) Date of publication of application: **15.10.2003**
(21) Application number: 03100762.8
(22) Date of filing: 25.03.2003
(51) Int. Cl.: H04N 1/40

(54) **System and method for characterizing a printing device**

(30) Priority: 08.04.2002 EP 02100352
(71) Applicant: AGFA-GEVAERT, 2640 Mortsel (BE)
(72) Inventor: Mahy, Marc, c/o Agfa-Gevaert Corporate, 2640 Mortsel (BE)

(57) **Abstract**

A method and a system are described for characterizing a printing device, wherein the system includes a forward look up table for obtaining color values as a function of given colorant values for the printing device. The forward look up table includes a plurality of sampling points (11-17), wherein at least one of the sampling points (11-17) is an ink changing point (16, 17) of a particular colorant, e.g. cyan, for which light and heavy inks are used. In one embodiment the ink changing point corresponds to a point where an amount of light ink reaches a maximum or where it becomes zero.

## Description

### FIELD OF THE INVENTION

The present invention relates to the field of image rendering by means of printing devices, particularly multicolor output devices; the invention especially concerns characterization of these devices.

### BACKGROUND OF THE INVENTION AND DEFINITION OF TERMS

Today, more and more printing systems are developed for the reproduction of color images. Several printing technologies are used such as conventional photography, electrophotography, thermal transfer, dye sublimation and ink jet systems to name a few.

All these systems can be described as multidimensional color printers with n colorants, such as the CMYK (cyan, magenta, yellow and black) inks of an ink jet system. In this document it is assumed that the colorant values range from 0% (no colorant laid down on the receiving substrate such as paper) to 100% (maximum amount of colorant laid down on the receiving substrate).

With colorant space is meant an n-dimensional space with n the number of independent variables with which the printer can be addressed. In the case of an offset printing press the dimension of the space corresponds to the number of inks of the printer. When CMYK inks are used, the dimension of the colorant space is normally four.

The colorant gamut is defined by the possible combinations of the colorant values, normally going from 0% to 100%. If there are no colorant limitations, the colorant gamut is a n-dimensional cube.

With color space is meant a space that represents a number of quantities of an object that characterize its color. In most practical situations, colors will be represented in a 3-dimensional space such as the CIE XYZ space. However, also other characteristics can be used such as multi-spectral values based on filters that are not necessarily based on a linear transformation of the color matching functions to represent color.

A printer model is a mathematical relation that expresses color values as a function of colorants for a given printer. The variables for the colorants are denoted as ***c***_{**1**}**,*c***_{**2**}**,...,*c***_{***n***} with n the dimension of the colorant space. An n-ink process is completely characterized by its colorant gamut with a number of colorant limitations and the printer model. Because of this close relationship between an n-ink process and the printer model, the operations typical for a printer model are also defined for the n-ink process.

The printer model is often based on a printer target. Such a target consists of a number of uniform color patches, defined in the colorant space of the printing device. The printer target is printed and measured, and based on the values of the patches in colorant space and the measured values, the printer model is made. A printer target is normally based on a number of sampling points along the different colorant axes. Based on the sampling points a regular grid can be constructed in colorant space of which a number of grid points are contained by the printer target. Hence a target can be said to be complete or incomplete (see **EP-A-1 146 726** for complete and incomplete printer targets).

Creating the printer model is also called characterizing the printer; this is an important step in the consistent reproduction of images. Before a printer is characterized, it is first calibrated, i.e. put in a standard state. When the printer model is created, it can be inverted in order to obtain a so-called characterization transformation. The characterization transformation transforms given colors from color space (typically CIELAB) to the colorant space of the printing device, whereas the printer model transforms given colorant values in the colorant space of the printer to color values in color space.

In characterizing printing devices, in most cases multidimensional Look Up Tables (LUT's) are used. A typical example of such a characterization system is represented by the ICC profile format (ICC stands for International Color Consortium). For printers, both the forward and the inverse relation is needed. The forward relation, embodied in the forward LUT, predicts the color values in function of given colorant values, i.e. it represents the printer model. The inverse relation, embodied in the inverse LUT, gives the colorant values required to obtain given color values, i.e. it represents the characterization transformation of the printer.

A LUT is often characterized by a number of sampling points per axis. Based on these sampling points, usually a regular grid is constructed. However, it is also possible to construct LUT's with non-regular grids. Also in this case the LUT's can be characterized by sampling points per axis but not all combinations of the sampling points of the different axes result in grid points. We refer to patent application **EP-A-1 146 726** for more information on grids, printer models, complete and incomplete printer targets, and related terms, and to patent application **EP-A-1 083 739** for more information on calibration, characterization, and other relevant terms.

In known systems, the sampling points of a LUT are chosen at predetermined values, e.g., for sampling points along a colorant axis c, at colorant values c = 0%, 25%, 50%, 75% and 100%.

Several printers have, for one or more of the colorants, multi-density inks, i.e. two or more inks that have a different density. By means of multi-density inks, the apparent visual resolution of the printed images can be increased. Multi-density inks can be used in several ways; however, if the calibration is based on 1-ink processes, the relation between the multi-density inks is fixed. If there is a light and heavy ink for cyan for example, a relation is given that converts a global cyan value to a light and a heavy cyan value. Hence the printer is still considered as a CMYK device, but internally the global ink values can be converted to multi-density ink values. The relation between a global ink value for a particular colorant and the multi-density ink values is given by an ink splitting table, also called ink mixing table.

There is still a need for an improved method for characterizing a printing device.

### SUMMARY OF THE INVENTION

The present invention is a system for characterizing a printing device as claimed in independent claim 1, and a method therefore as claimed in independent claim 6. Preferred embodiments of the invention are set out in the dependent claims.

The present invention concerns the selection of sampling points for the characterization of a printing device. In a preferred embodiment of the invention, at least one of the sampling points of the forward look up table used in the characterization is an ink changing point, which is, in this document, a point where the ink mixing table has a non-smooth behavior.

An advantage of the invention is that it allows to obtain a much more accurate printer model.

Another advantage is that color changes in the reproduced images are represented smoothly.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 shows an ink mixing table;
Fig. 2 represents a graph of CIE lightness L* for the ink mixing table of Fig. 1.

### DETAILED DESCRIPTION OF THE INVENTION

As mentioned already above, if a printing device has multi-density inks for at least one of its colorants, and the calibration is based on 1-ink processes, customarily an ink splitting table (or ink mixing table) is used. Such an ink splitting table gives the relation between a global ink value for the colorant for which multi-density inks are used and the multi-density ink values.

If the multi-density inks include a light and heavy ink, then typically the light ink increases till a given global value. From this point on the light value decreases and the heavy ink increases. At the global value for which the light ink reaches its maximum and the heavy ink increases, the behavior of the printer might change suddenly. Hence it is important that the behavior of the printer is properly modeled for this value. Therefore it is desirable that the forward look up table contains colorant combinations, preferably all colorant combinations, related to this global value. If for example there are two cyan multi-density inks and one magenta, one yellow and one black ink, and the global value at which the light cyan is maximal is 40%, then the 40% value is preferably a sampling point along the global cyan axis.

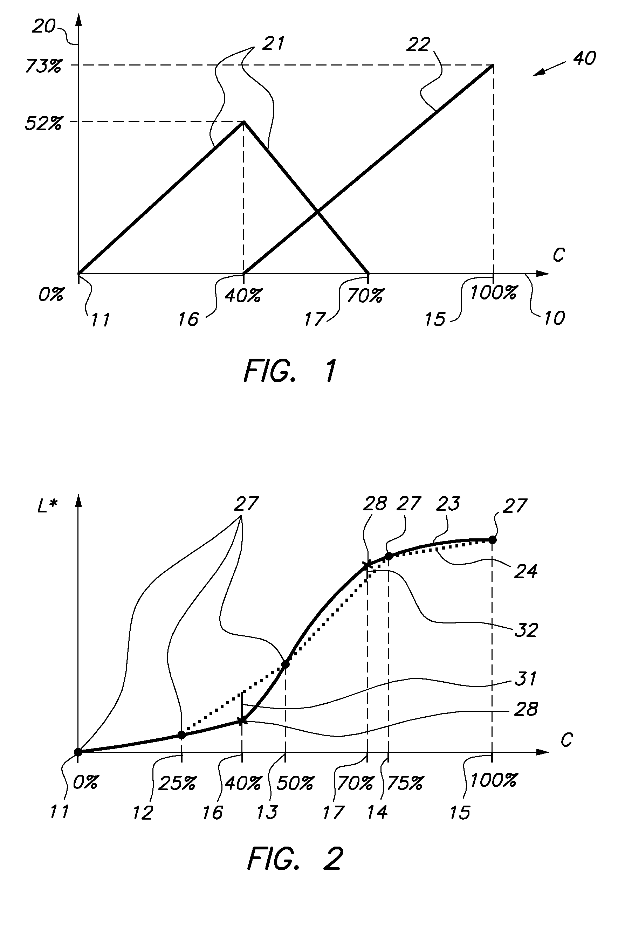

Fig. 1 shows an ink mixing table 40 for a light and a heavy multi-density ink of a particular colorant (e.g. cyan). Fig. 1 gives the amount of light ink, curve 21, and the amount of heavy ink, curve 22, as a function of the global colorant value c for the particular colorant, which is indicated along axis 10. In the embodiment of Fig. 1, the amount of light ink 21 reaches a maximum at a global colorant value of c = 40% and then decreases to zero at c = 70%. The amount of heavy ink 22 on the other hand increases from zero, at c = 40%, up to a maximum reached at c = 100%. The amounts of light and heavy ink are given by the ordinate values of curves 21 and 22, i.e. by the values along axis 20. In Fig. 1, the maximum amount for the light ink is 52% and that for the heavy ink 73%. As is the case in the embodiment depicted in Fig. 1, the maximum amounts do not have to be 100% but can be lower, in order to reproduce colors with less ink.

The behavior of the ink mixing table of Fig. 1 is not smooth at c = 40% and c = 70%. This behavior in most cases induces a non-smooth change in the color values. In Fig. 2 one of the color values, CIE lightness L*, is represented for the mixing of the inks represented in Fig 1. Fig. 2 indeed shows a non-smooth change of lightness L* for c = 40% and c = 70%, as indicated by the solid curve 23 (remark: in Fig. 2, point c = 0% of curve 23 has a high value of L*, e.g. L* = 100 if L* is determined with respect to the so-called 'white of the paper', while point c = 100% of curve 23 has a low value of L*, e.g. L* = 40). If the forward look up table contains the sampling points 16 and 17 at c = 40% and c = 70%, the coordinates of the points 28 are known and hence the printer model can predict this non-smooth behavior. If however the forward look up table does not contain these sampling points 16, 17, but for example only the sampling points 11-15 at respectively c = 0%, 25%, 50%, 75% and 100%, only the coordinates of the points 27 are known. There is thus no information available of the color behavior at c = 40% and 70%, and hence the model will not be able to predict the non-smooth effects at c = 40% and 70%. The L* values predicted by a printer model based on sampling points 11-15 is shown in Fig. 2 by the dotted curve 24. The errors made at c = 40% and 70% are quite serious; they are indicated by the line segments 31 and 32, which are the differences between the ordinate values of the solid curve 23 and the dotted curve 24.

The effect of properly modeling the printer can easily be shown for the reproduction of neutral colors, i.e. white, grays and blacks, and this especially for low GCR (Gray Component Replacement) values. Low GCR means that the gray values are made with almost a minimal amount of black, i.e., for a CMYK printing device, mainly with CMY. If a minimal amount of black is used for reproducing gray values, the gray values are reproduced in a very unstable way. This means that a small change of the colorant values has a maximal effect on the required color. If however, a maximal amount of black is used (high GCR), the grays are reproduced in a very stable way. This effect can be easily seen as changes in the CMY values often induce a small color shift of the neutrals and this shift changes in most cases smoothly from a dark gray to a light gray. As a small color change in the neutrals (saturation mismatch, or a*b* mismatch as represented in CIELAB space) is the most visible for gray colors, it is important to reduce this effect as much as possible.

As is clear from the explanation above, to model the printer properly in case of multi-density inks and the use of ink mixing tables, it is advantageous to include the values for which a multi-density ink changes non-smoothly. The points that correspond to these values are called ink changing points in this document. Typical ink changing points correspond to values at which an additional ink starts (in Fig. 1: c = 40% for curve 22 of the heavy ink), at which an ink reaches a maximum (c = 40% for curve 21 of the light ink), becomes constant, or zero (c = 70% for curve 21 of the light ink). Mathematically speaking, at an ink changing point the derivative of the ink mixing table is not continuous and hence the ink mixing table has a non-smooth behavior at the ink changing point.

The inverse LUT may be obtained by inverting the printer model. In case of multi-density inks, the inverse LUT preferably includes one or more sampling points at which the multi-density inks have a non-smooth behavior. The inverse LUT has sampling points along the color axes. Typically CIELAB is used as color space. Within this space, colors for which a* and b* are substantially zero are considered to be neutral. For neutrals, the lightness component L* varies from 0 to 100, wherein 0 corresponds to black and 100 to pure white. As the neutral colors are very difficult to reproduce, it is advantageous to choose a proper sampling along the lightness axis. For the same reason as for the forward model, lightness values for which one of the multi-density inks behaves non-smoothly are preferably sampling points. In our example of Figs. 1 and 2 with two multi-density inks, these preferred sampling points along the lightness axis correspond to the gray values for which the multi-density colorant value is c = 40% and c = 70%.

A sampling point belonging to the grid of an inverse LUT for which one of the corresponding separation values is an ink changing point is considered as an ink changing point of this LUT.

In a system that includes a look up table for characterizing a printing device, and in a method for constructing such a look up table, it is thus advantageous that the look up table includes at least one ink changing point. The look up table may be a forward look up table. The look up table may be an inverse look up table.

The invention was discussed especially with respect to CMYK ink jet printers, but the present invention is not limited to the embodiments discussed above. The invention is also applicable to printing devices using other printing technologies, such as electrophotography, thermal transfer, dye sublimation. Other colors than CMYK may be applied; the printer may have more, or less, than four colorants.

Having described in detail preferred embodiments of the current invention, it will now be apparent to those skilled in the art that numerous modifications can be made therein without departing from the scope of the invention as defined in the appending claims.

### List of reference signs

- 10 :: colorant axis
- 11-17 :: sampling point
- 16 :: ink changing point
- 17 :: ink changing point
- 20 :: ink amount
- 21 :: curve
- 22 :: curve
- 23 :: curve
- 24 :: curve
- 27 :: point
- 28 :: point
- 31 :: error
- 32 :: error
- 40 :: ink mixing table

## Claims

1. A system for **characterizing** a printing device, the system comprising a forward look up table for obtaining color values as a function of given colorant values for said printing device, said forward look up table having a plurality of sampling points (11-17);
**characterized in that** said plurality of sampling points (11-17) includes an ink changing point (16, 17) of said printing device.

2. The system according to claim 1, wherein said printing device has, for a particular colorant, a light ink and a heavy ink and wherein said ink changing point (16, 17) is selected from the group of a first point (16) where an amount of said light ink reaches a maximum and a second point (17) where said amount of said light ink becomes zero.

3. The system according to any one of the preceding claims wherein said plurality of sampling points (11-17) includes all ink changing points (16, 17) of said printing device.

4. The system according to any one of the preceding claims wherein said printing device is an ink-jet printer.

5. The system according to any one of the preceding claims further comprising said printing device.

6. A method for constructing a look up table for **characterizing** a printing device, wherein said look up table is a forward look up table for obtaining color values as a function of given colorant values for said printing device, the method comprising the step of:
- determining a sampling point (11-17) of said forward look up table;
**characterized in that** the method further comprises the steps of:
- determining an ink changing point (16, 17) of said printing device;
- adding said ink changing point (16, 17) to said forward look up table as an additional sampling point (16, 17).

7. The method according to claim 6 wherein said printing device has, for a particular colorant, a light ink and a heavy ink, the method further comprising the step of:
- selecting said ink changing point (16, 17) from the group of a first point (16) where an amount of said light ink reaches a maximum and a second point (17) where said amount of said light ink becomes zero.

8. The method according to claim 6 or claim 7 further comprising the steps of:
- determining all ink changing points (16, 17) of said printing device;
- adding all said ink changing points (16, 17) to said forward look up table.
